# EUROPEAN PATENT APPLICATION

(11) **EP 4 775 849 A1**
(43) Date of publication of application: **15.07.2026**
(21) Application number: 25163797.1
(22) Date of filing: 14.03.2025
(51) Int. Cl.: F16H 25/20, A61H 19/00

(54) **MULTI-PURPOSE SCREW TELESCOPIC TRANSMISSION MECHANISM WITH MOTOR AND MAGNETIC ENCODER, AND BRACKET THEREOF**

(30) Priority: 13.01.2025 CN 202510049432
(71) Applicant: Toparc Technology (Shenzhen) Co., Ltd, Shenzhen Guangdong (CN)
(72) Inventor: XI, Chunhua, Shenzhen (CN); PENG, Canfeng, Shenzhen (CN)
(74) Representative: Chung, Hoi Kan

(57) **Abstract**

Provided in the present disclosure are a multi-purpose screw telescopic transmission mechanism with a motor and a magnetic encoder, and a bracket thereof. The screw telescopic transmission mechanism includes a main machine and a rotating bracket; the main machine is mounted on the rotating bracket and is configured to drive an external part to move back and forth, and the rotating bracket is configured to support the main machine and adjust an angle of the main machine; a rotating shaft of a first motor is connected to one end of a lead screw through a coupling. The multi-purpose screw telescopic transmission mechanism with the motor and the magnetic encoder, and the bracket thereof provided by the present disclosure are efficient, reliable, safe and easy to use, provide users with a better product experience, reduce the manufacturing costs for enterprises, and improve the market competitiveness.

## Description

### TECHNICAL FIELD

The present disclosure relates to the technical field of automatic equipment, specifically to a multi-purpose screw telescopic transmission mechanism with a motor and a magnetic encoder, and a bracket thereof.

### BACKGROUND

Regarding the design of personal massage appliances, conventional transmission mechanisms mostly use brushed motors in conjunction with gearboxes to achieve a reciprocating motion. Although this type of design can meet basic functional requirements, it has some deficiencies in practical applications:
1. Wear and noise: There is contact friction between an electric brush and a commutator inside a conventional brushed motor. As a result, after long-term use, significant noise will be generated and the electric brush will gradually wear out, thus affecting the performance and service life of the motor.
2. Low positioning accuracy: It is difficult for a conventional mechanical stroke limiting device to provide accurate position feedback, resulting in failure to precisely control the telescopic length of equipment during operation, which affects the user experience.
3. High structural complexity: Due to the need for additional gearboxes and other auxiliary components, the structure of the entire system becomes complex, which not only increases the manufacturing costs but also raises the difficulty of maintenance.
4. Safety issues: The lead screw transmission mechanism in the conventional design lacks an effective buffering mechanism, and during high-speed movement, it may hit the end surface of the motor shaft due to inertia, thereby causing damage to the motor.

Therefore, the prior art has shortcomings and needs to be further improved.

### SUMMARY

In view of the problems in the prior art, the present disclosure provides a multi-purpose screw telescopic transmission mechanism with a motor and a magnetic encoder, and a bracket thereof.

To achieve the above objective, a specific solution of the present disclosure is as follows:
The present disclosure provides a multi-purpose screw telescopic transmission mechanism with a motor and a magnetic encoder, and a bracket thereof. The multi-purpose screw telescopic transmission mechanism includes:
a main machine and a rotating bracket;
the main machine is mounted on the rotating bracket and is configured to drive an external part to move back and forth, and the rotating bracket is configured to support the main machine and adjust an angle of the main machine;
the main machine includes a first motor, a lead screw, a nut, a mounting bracket, and sliding rods;
a rotating shaft of the first motor is connected to one end of the lead screw through a coupling, the nut is mounted on the lead screw, the mounting bracket is mounted on the nut, a sliding rod is disposed on each of two sides of the mounting bracket, and the external part is mounted on the mounting bracket;
a magnet is further disposed on the mounting bracket, a first Hall PCB and a second Hall PCB are further disposed on a moving path of the mounting bracket and are configured to set a starting point and an ending point respectively, and the first Hall PCB and the second Hall PCB are configured to sense a motion process of the magnet, so as to set a maximum stroke of motion of the mounting bracket; and
the first motor drives the lead screw to rotate forward and backward to drive the nut to move back and forth, thereby driving the external part mounted on the mounting bracket to move back and forth.

Further, the external part includes a TPE channel or a massager.

Further, the first motor is a brushless motor.
Further, the main machine further includes a main control PCB, a motor drive PCB, a first fixing bracket, a second fixing bracket, and a ball bearing;
the first fixing bracket is configured to fix the first motor, the second fixing bracket is mounted on the first motor, the motor drive PCB is mounted on the second fixing bracket, the main control PCB is disposed on a lower side of the first motor, and the ball bearing is further disposed at one end of the lead screw away from the first motor;
the main control PCB is electrically connected to the motor drive PCB, the first Hall PCB, and the second Hall PCB; and
the motor drive PCB is electrically connected to the first motor.

Further, a thrust bearing is further disposed between the first motor and the coupling, the rotating shaft of the first motor passes through the thrust bearing, and the thrust bearing is configured to prevent the first motor from being damaged due to impact on the first motor during motion of the mounting bracket.
Further, the main machine further includes a housing; and
a first mounting hole and a second mounting hole are further formed in a bottom of the housing to mount the main machine on the rotating bracket.

Further, the housing is provided with an ON/OFF button on one side and a mode button on the other side; and
the ON/OFF button and the mode button are electrically connected to the main control PCB.

Further, the bracket includes a base, a U-shaped bracket, and a supporting crossbar; and
a lower end of the U-shaped bracket is mounted on the base, two ends of the supporting crossbar are mounted at an upper end of the U-shaped bracket, and the main machine is mounted on the supporting crossbar.

Further, a first bolt is disposed on the supporting crossbar, and the first bolt penetrates through the supporting crossbar and is connected to the bottom of the housing of the main machine;
a second bolt is further disposed on each of two sides of the supporting crossbar, a vertical adjustment groove is formed in each of two sides of the U-shaped bracket, the second bolts pass through the vertical adjustment grooves to fix the supporting crossbar on the U-shaped bracket, the height of the main machine is adjusted by adjusting a position thereof in the vertical adjustment grooves, and an inclination angle of the main machine is adjusted by rotating the supporting crossbar; and
the lower end of the U-shaped bracket is mounted on the base through a third bolt.
Further, a limiting post is further disposed on an upper side of the supporting crossbar;
the first bolt is mounted in the first mounting hole, and the limiting post is mounted in the second mounting hole; and
a suction cup is further disposed on the base to adsorb and fix the rotating bracket.

With the technical solution, the present disclosure has the following beneficial effects:

### 1. Improvement of operational efficiency and service life:

Application of the brushless motor: The brushless motor is used as a power source, which not only eliminates the wear problem caused by friction of an electric brush in a conventional brushed motor, but also reduces noise, improves the operational efficiency, and extends the service life of equipment.

### 2. Enhancement of position control precision:

Magnetic encoder system and Hall PCB sensing components: The position change of the mounting bracket can be accurately detected by these components, thereby achieving precise control of a telescopic stroke, ensuring that each operation can achieve the expected effect, and improving the user experience.

### 3. Structure simplification and cost reduction:

Direct drive design: A conventional gearbox structure is eliminated, and the first motor is used to directly drive the lead screw, thus reducing intermediate processes, making the overall structure simpler, decreasing the production costs, and facilitating maintenance.

### 4. Optimization of safety performance:

Thrust bearing protection: The thrust bearing is disposed between the first motor and the coupling to prevent the mounting bracket from hitting the rotating shaft of the motor when moving quickly, thus effectively protecting the motor from damage.

Adjustable height and angle: The adjustment design on the supporting crossbar allows a user to conveniently adjust the height and inclination angle of the main machine, thus improving the flexibility and safety of use; and the suction cup on the base further enhances the stability of the equipment when it is placed.

### 5. Multifunctional adaptability:

Interchangeability of external parts: This transmission mechanism can be compatible with different types of external parts, such as the TPE channel or the massager, thereby achieving the purpose of one set of hardware supporting multiple application scenarios, and greatly improving the universality and market competitiveness of the product.

### 6. Ease of use and maintenance:

Integrated control system: The integrated design of electronic components such as the main control PCB and the motor drive PCB, coupled with the setting of the ON/OFF button and the mode button, allows the user to easily control various functions of the equipment, and is also helpful for subsequent maintenance and technical support.

### 7. Compact design that saves space:

Compact housing and internal component layout: All key components are reasonably arranged in a compact housing, which not only ensures good mechanical performance but also minimizes the product size, so that the product is suitable for more usage scenarios.

### 8. It is convenient to adjust the height and angle of the main machine by the rotating bracket.

### BRIEF DESCRIPTION OF DRAWINGS

FIG. 1 is a perspective view of the present disclosure;
FIG. 2 is a perspective view of a main machine in the present disclosure;
FIG. 3 is a perspective view of a rotating bracket in the present disclosure;
FIG. 4 is a perspective view of a main machine in the present disclosure after removing a housing and mounting a massager;
FIG. 5 is a sectional view of a main machine in the present disclosure after removing a housing and mounting a massager;
FIG. 6 is a perspective view of the present disclosure after mounting a TPE channel; and
FIG. 7 is a perspective view of the present disclosure after mounting a massager.

In the drawings:
1. main machine; 2. rotating bracket; 3. first motor; 4. lead screw; 5. nut; 6. mounting bracket; 7. sliding rod; 8. coupling; 9. magnet; 10. first Hall PCB; 11. second Hall PCB; 12. TPE channel; 13. massager; 14. main control PCB; 15. motor drive PCB; 16. first fixing bracket; 17. second fixing bracket; 18. ball bearing; 19. thrust bearing; 20. housing; 21. first mounting hole; 22. second mounting hole; 23. ON/OFF button; 24. mode button; 25. base; 26. U-shaped bracket; 27. supporting crossbar; 28. first bolt; 29. second bolt; 30. vertical adjustment groove; 31. third bolt; 32. limiting post; and 33. suction cup.

### DETAILED DESCRIPTION OF THE EMBODIMENTS

The present disclosure is further described below with reference to the accompanying drawings and embodiments. It can be understood that the specific embodiments described herein are used merely to explain the present disclosure, rather than to limit the present disclosure. It is also to be noted that, for ease of description, only parts related to the present disclosure rather than all structures are shown in the drawings.

In the description of the present disclosure, unless otherwise expressly specified and limited, the terms "connected", "connection", and "fixed" should be understood in a broad sense. For example, it may be a fixed connection, a detachable connection, or integrated; it may be a mechanical connection or an electrical connection; it may be directly connected or indirectly connected via an intermediate medium; and it may be internal communication between two components or interaction between two components. Those of ordinary skill in the art can understand specific meanings of the above terms in the present disclosure based on specific circumstances.

In the present disclosure, the case where the first feature is "over" or "under" the second feature may include a case where the first and second features are in direct contact with each other, or a case where the first and second features are not in direct contact with each other but are in contact with each other via another feature between them, unless otherwise expressly specified and defined. Moreover, the case where the first feature is "over", "above", and "on" the second feature includes a case where the first feature is right above and obliquely above the second feature, or the case only indicates that the horizontal height of the first feature is greater than the horizontal height of the second feature. The case where the first feature is "under", "below", and "beneath" the second feature includes a case where the first feature is right below or obliquely below the second feature, or the case only indicates that the horizontal height of the first feature is less than the horizontal height of the second feature.

In the description of this embodiment, the orientations or positional relationships indicated by the terms "up", "down", "front", "back", "left", "right", etc. are based on the orientations or positional relationships shown in the accompanying drawings, only for the convenience of description and simplification of operation rather than indicating or implying that the device or element referred to must have a particular orientation or be constructed and operated in a particular orientation, and therefore cannot be construed as a limitation to the present disclosure. In addition, the terms "first" and "second" are only used to distinguish the descriptions and do not have special meanings.

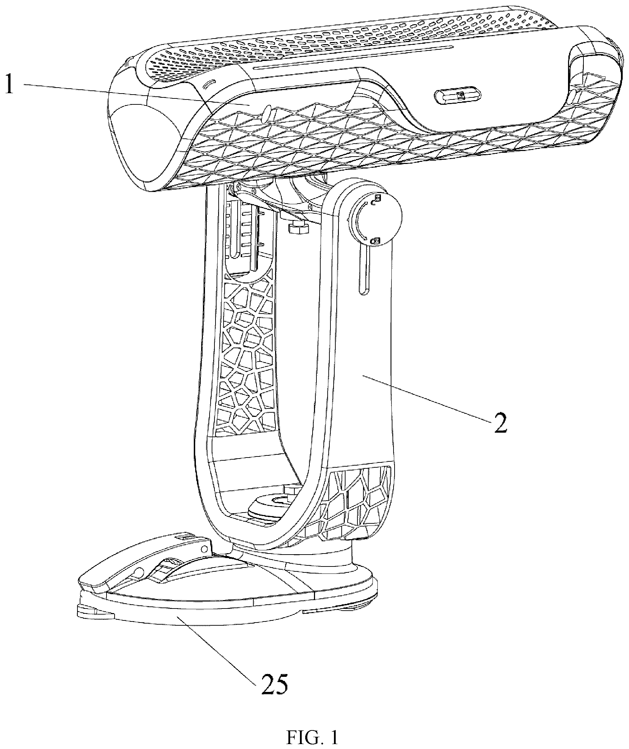

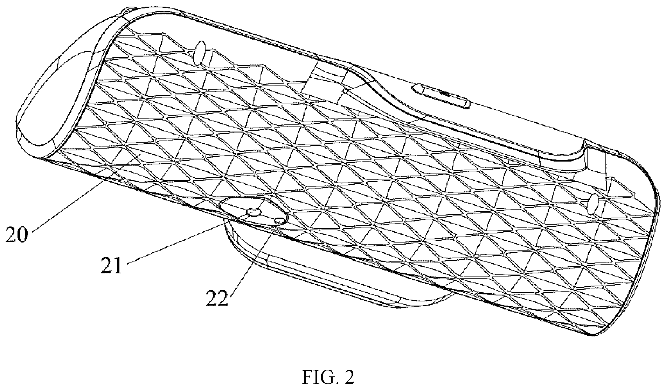

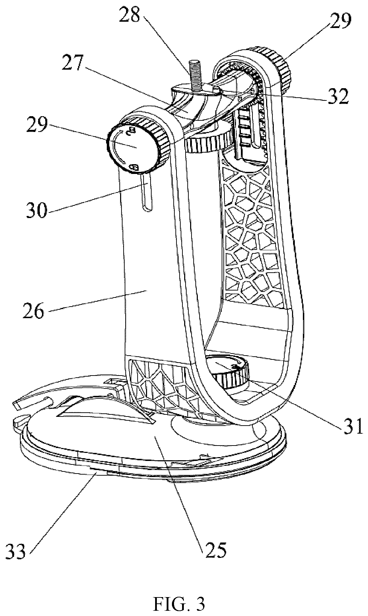

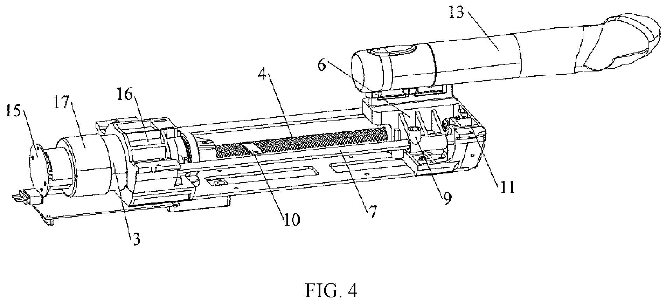

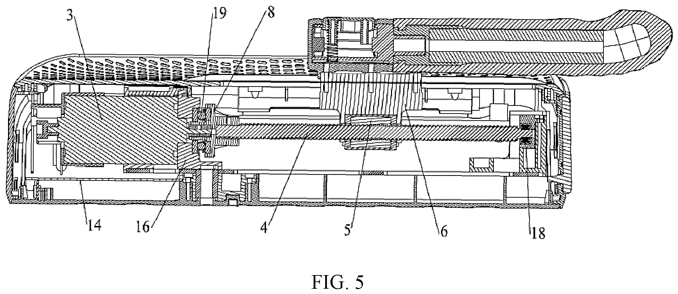

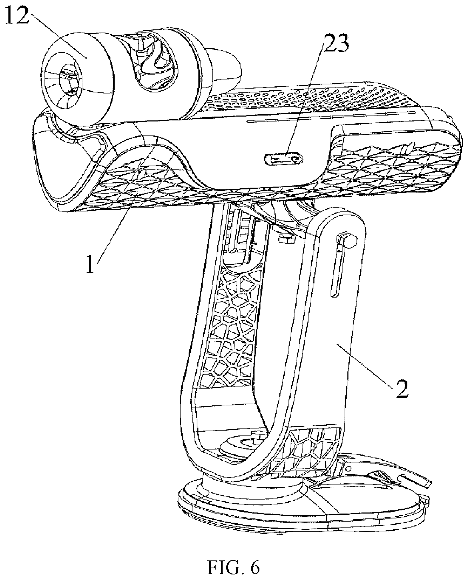

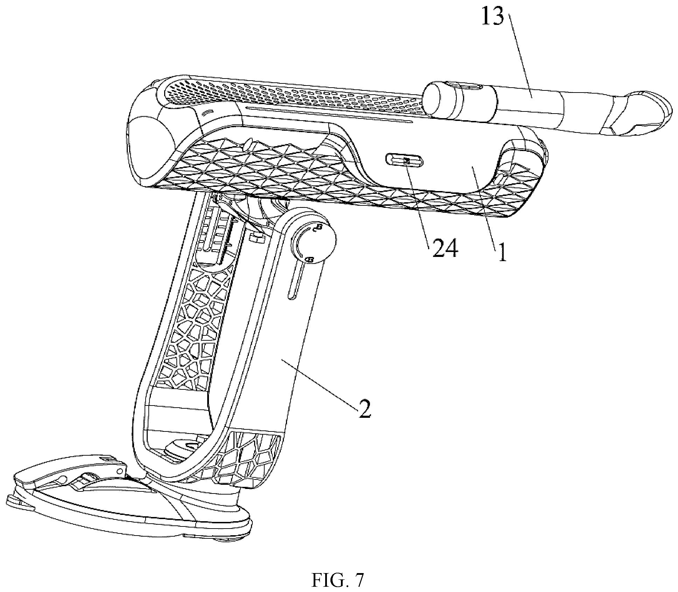

As shown in FIG. 1 to FIG. 7, the present disclosure provides a multi-purpose screw telescopic transmission mechanism with a motor and a magnetic encoder, and a bracket thereof. The multi-purpose screw telescopic transmission mechanism includes a main machine 1 and a rotating bracket 2;
the main machine 1 is mounted on the rotating bracket 2, the main machine 1 is configured to drive an external part to move back and forth, and the rotating bracket 2 is configured to support the main machine 1 and adjust an angle of the main machine 1;
the main machine 1 includes a first motor 3, a lead screw 4, a nut 5, a mounting bracket 6, and sliding rods 7;
a rotating shaft of the first motor 3 is connected to one end of the lead screw 4 through a coupling 8, the nut 5 is mounted on the lead screw 4, the mounting bracket 6 is mounted on the nut 5, a sliding rod 7 is disposed on each of two sides of the mounting bracket 6, and the external part is mounted on the mounting bracket 6;
a magnet 9 is further disposed on the mounting bracket 6, a first Hall PCB 10 and a second Hall PCB 11 are further disposed on a moving path of the mounting bracket 6, the first Hall PCB 10 and the second Hall PCB 11 are configured to set a starting point and an ending point respectively, and the first Hall PCB 10 and the second Hall PCB 11 are configured to sense a motion process of the magnet 9, so as to set a maximum stroke of motion of the mounting bracket 6; and
the first motor 3 drives the lead screw 4 to rotate forward and backward to drive the nut 5 to move back and forth, thereby driving the external part mounted on the mounting bracket 6 to move back and forth.

The external part includes a TPE channel 12 or a massager 13.

The first motor 3 is a brushless motor.

The main machine 1 further includes a main control PCB 14, a motor drive PCB 15, a first fixing bracket 16, a second fixing bracket 17, and a ball bearing 18;
the first fixing bracket 16 is configured to fix the first motor 3, the second fixing bracket 17 is mounted on the first motor 3, the motor drive PCB 15 is mounted on the second fixing bracket 17, the main control PCB 14 is disposed on a lower side of the first motor 3, and the ball bearing 18 is further disposed at one end of the lead screw 4 away from the first motor 3;
the main control PCB 14 is electrically connected to the motor drive PCB 15, the first Hall PCB 10, and the second Hall PCB 11; and
the motor drive PCB 15 is electrically connected to the first motor 3.

A thrust bearing 19 is further disposed between the first motor 3 and the coupling 8, the rotating shaft of the first motor 3 passes through the thrust bearing 19, and the thrust bearing 19 is configured to prevent the first motor 3 from being damaged due to impact on the first motor 3 during motion of the mounting bracket 6.

The main machine 1 further includes a housing 20; and
a first mounting hole 21 and a second mounting hole 22 are further formed in a bottom of the housing 20 to mount the main machine 1 on the rotating bracket 2.

The housing 20 is provided with an ON/OFF button 23 on one side and a mode button 24 on the other side; and
the ON/OFF button 23 and the mode button 24 are electrically connected to the main control PCB 14.

The bracket includes a base 25, a U-shaped bracket 26, and a supporting crossbar 27; and
a lower end of the U-shaped bracket 26 is mounted on the base 25, two ends of the supporting crossbar 27 are mounted at an upper end of the U-shaped bracket 26, and the main machine 1 is mounted on the supporting crossbar 27.
a first bolt 28 is disposed on the supporting crossbar 27, and the first bolt 28 penetrates through the supporting crossbar 27 and is connected to the bottom of the housing 20 of the main machine 1;
a second bolt 29 is further disposed on each of two sides of the supporting crossbar 27, a vertical adjustment groove 30 is formed in each of two sides of the U-shaped bracket 26, the second bolts 29 pass through the vertical adjustment grooves 30 to fix the supporting crossbar 27 on the U-shaped bracket 26, the height of the main machine 1 is adjusted by adjusting a position thereof in the vertical adjustment grooves 30, and an inclination angle of the main machine 1 is adjusted by rotating the supporting crossbar 27; and
the lower end of the U-shaped bracket 26 is mounted on the base 25 through a third bolt 31.

A limiting post 32 is further disposed on an upper side of the supporting crossbar 27;
the first bolt 28 is mounted in the first mounting hole 21, and the limiting post 32 is mounted in the second mounting hole 22; and
a suction cup 33 is further disposed on the base 25 to adsorb and fix the rotating bracket 2.

The working principle of the present disclosure is as follows:

### Working principle of the main machine 1

### Startup and control:

A user can turn on or off equipment by pressing the ON/OFF button 23 on the housing 20. The mode button 24 is configured to select different operation modes.

The main control PCB 14 receives a signal from the button and sends an instruction to the motor drive PCB 15 according to a preset program.

### Power transmission:

The first motor 3 (the brushless motor) starts to operate after receiving the electrical signal sent by the motor drive PCB 15, and the rotating shaft thereof is connected to one end of the lead screw 4 through the coupling 8.

The rotating shaft rotates to drive the lead screw 4 to rotate forward and backward, so that the nut 5 mounted on the lead screw 4 makes a rectilinear reciprocating motion along the lead screw 4.

### Position detection and feedback:

The magnet 9 is disposed on the mounting bracket 6, and there are the first Hall PCB 10 and the second Hall PCB 11 serving as position sensors for the starting point and the ending point respectively on the moving path of the mounting bracket.

When the magnet 9 moves together with the mounting bracket 6, the Hall PCBs will be triggered to sense its position change, and the Hall PCBs will feed back this information to the main control PCB 14, so as to ensure that the mounting bracket 6 moves accurately according to the set maximum stroke.

The main control PCB 14 adjusts the instruction to the motor drive PCB 15 based on the feedback information, so as to precisely control a movement range of the nut 5 and ensure that the external part (e.g., the TPE channel 12 or the massager 13) can perform a predetermined reciprocating motion.

### Safety protection mechanism:

The thrust bearing 19 is disposed between the first motor 3 and the coupling 8 to prevent the mounting bracket 6 from hitting the rotating shaft of the motor when moving quickly, thus protecting the motor from damage.

### Auxiliary support structure:

The sliding rods 7 are mounted on two sides of the mounting bracket 6 to provide guidance for the mounting bracket 6, thus ensuring its smooth movement, and reducing a frictional force.

The ball bearing 18 is disposed at one end of the lead screw 4 away from the first motor 3, which reduces the frictional resistance during rotation and improves the transmission efficiency.

### Working principle of the bracket:

### Fixation and angle adjustment of the main machine 1:

The main machine 1 is fixed on the supporting crossbar 27 through the first mounting hole 21 and the second mounting hole 22 in the bottom, the supporting crossbar 27 is supported by the U-shaped bracket 26, and the entire structure is mounted on the base 25.

The first bolt 28 and the limiting post 32 are disposed on the supporting crossbar 27 to stabilize the main machine 1; and the vertical adjustment grooves 30 in the two sides of the U-shaped bracket 26 allow the user to change the height of the main machine 1 by adjusting the position of the second bolts 29, or to adjust the inclination angle of the main machine 1 by rotating the supporting crossbar 27.

### Enhancement of stability:

The suction cup 33 is disposed on the base 25 and can be adsorbed to a flat surface, which further enhances the stability of the equipment when it is placed, and ensures that the equipment will not easily slide or tip over during use.

In conclusion, through the above design, the multi-purpose screw telescopic transmission mechanism with a motor and a magnetic encoder, and the bracket thereof achieve an efficient, precise and safe operation process, and provide a good user experience.

### Embodiment 1: Application to a male adult product (masturbator)

### Equipment configuration

Main machine 1: It includes components such as the brushless motor, the lead screw 4, the nut 5, the mounting bracket 6, and the sliding rods 7.

External part: TPE channel 12 (a channel made of soft rubber materials that simulates a real tactile sensation).

Control system: The main control PCB 14, the motor drive PCB 15, the first Hall PCB 10, and the second Hall PCB 11 are configured to control and monitor an operating status of the equipment.

Safety protection: The thrust bearing 19 is disposed between the motor and the coupling 8 to prevent the mounting bracket 6 from hitting the rotating shaft of the motor.

### Workflow

Equipment startup: The user presses the ON/OFF button 23 on the housing 20 to start the equipment. At this time, the main control PCB 14 receives a power-on signal and initializes the system to prepare for receiving further instructions.

Mode selection: Through the mode button 24, the user can select different working modes, such as different vibration intensities or frequencies. These selections will be parsed by the main control PCB 14 and sent to the motor drive PCB 15.

Position calibration: When the equipment is started for the first time or when the user changes the mode, the magnet 9 on the mounting bracket 6 will trigger the first Hall PCB 10 and the second Hall PCB 11 on the path to determine position information of the starting point and the ending point of the maximum stroke. This information is fed back to the main control PCB 14 to ensure that subsequent actions comply with preset parameters.

Execution of reciprocating motion: The brushless motor operates in a set mode and drives the lead screw 4 to rotate, so that the nut 5 makes a rectilinear reciprocating motion along the lead screw 4 to push the TPE channel 12 mounted on the mounting bracket 6 to perform corresponding telescopic actions, thus providing a comfortable massage experience.

Safety protection: Throughout the process, the thrust bearing 19 effectively absorbs inertial impact that may be generated due to rapid movement, thus avoiding damage to the motor; meanwhile, the ball bearing 18 reduces the frictional resistance at the end of the lead screw 4 and ensures the transmission efficiency.

### Embodiment 2: Application to a female adult product (massager 13)

### Equipment configuration

Main machine 1: It is the same as Embodiment 1 and includes key components such as the brushless motor, the lead screw 4, the nut 5, the mounting bracket 6, and the sliding rods 7.

External part: head of massager 13 (a massage device specially designed for women).

Control system: It also relies on the main control PCB 14, the motor drive PCB 15, the first Hall PCB 10, and the second Hall PCB 11 to achieve intelligent control.

Angle adjustment: The angle of the main machine 1 can be adjusted by rotating the supporting crossbar 27 to meet the requirements of different usage scenarios; and the suction cup 33 on the base 25 ensures that the equipment is placed stably.

### Workflow

Equipment preparation: First, the user needs to replace the TPE channel 12 on the main machine 1 with the dedicated head of massager 13, turning it into massage equipment suitable for women.

Turn-on and setting: After the ON/OFF button 23 is pressed to turn on the equipment, the user can select a suitable massage mode by the mode button 24, such as gentle, medium, or intense massage.

Automatic calibration: The equipment automatically completes a full stroke calibration, that is, a round-trip test from the shortest to the longest position, to ensure that all functions operate normally.

Personalized massage: Based on the mode selected by the user, the brushless motor precisely controls the rotation direction and speed of the lead screw 4, thereby enabling the head of massager 13 to produce continuous and regular changes, and providing the user with a pleasant massage experience.

Height and angle adjustment: The user can adjust the height of the supporting crossbar 27 and the inclination angle of the main machine 1 according to personal preferences to find the most suitable posture for use and enjoy a more personalized massage service.

Stable fixation: The suction cup 33 on the base 25 can provide additional stability on a smooth surface, so the user does not need to worry about the problem of equipment movement during use.

The two embodiments demonstrate how the disclosure is flexibly applied to different types of adult care products, which not only maintains the consistency in technical core but also makes appropriate adjustments according to different requirements, thus meeting a wide range of market demands.
The above descriptions are only preferred embodiments of the present disclosure and are not intended to limit the scope of the present disclosure. Any equivalent structural changes made using the content of the specification and drawings of the present disclosure under the concept of the present disclosure, directly/indirectly applied in other related technical fields, are included within the scope of protection of the present disclosure.

## Claims

1. A multi-purpose screw telescopic transmission mechanism with a motor and a magnetic encoder, and a bracket thereof, wherein the screw telescopic transmission mechanism comprises
a main machine and a rotating bracket;
the main machine is mounted on the rotating bracket and is configured to drive an external part to move back and forth, and the rotating bracket is configured to support the main machine and adjust an angle of the main machine;
the main machine comprises a first motor, a lead screw, a nut, a mounting bracket, and sliding rods;
a rotating shaft of the first motor is connected to one end of the lead screw through a coupling, the nut is mounted on the lead screw, the mounting bracket is mounted on the nut, a sliding rod is disposed on each of two sides of the mounting bracket, and the external part is mounted on the mounting bracket;
a magnet is further disposed on the mounting bracket, a first Hall PCB and a second Hall PCB are further disposed on a moving path of the mounting bracket and are configured to set a starting point and an ending point respectively, and the first Hall PCB and the second Hall PCB are configured to sense a motion process of the magnet, so as to set a maximum stroke of motion of the mounting bracket; and
the first motor drives the lead screw to rotate forward and backward to drive the nut to move back and forth, thereby driving the external part mounted on the mounting bracket to move back and forth.

2. The multi-purpose screw telescopic transmission mechanism with a motor and a magnetic encoder, and the bracket thereof according to claim 1, wherein
the external part comprises a TPE channel or a massager.

3. The multi-purpose screw telescopic transmission mechanism with a motor and a magnetic encoder, and the bracket thereof according to claim 1, wherein
the first motor is a brushless motor.

4. The multi-purpose screw telescopic transmission mechanism with a motor and a magnetic encoder, and the bracket thereof according to claim 1, wherein
the main machine further comprises a main control PCB, a motor drive PCB, a first fixing bracket, a second fixing bracket, and a ball bearing;
the first fixing bracket is configured to fix the first motor, the second fixing bracket is mounted on the first motor, the motor drive PCB is mounted on the second fixing bracket, the main control PCB is disposed on a lower side of the first motor, and the ball bearing is further disposed at one end of the lead screw away from the first motor;
the main control PCB is electrically connected to the motor drive PCB, the first Hall PCB, and the second Hall PCB; and
the motor drive PCB is electrically connected to the first motor.

5. The multi-purpose screw telescopic transmission mechanism with a motor and a magnetic encoder, and the bracket thereof according to claim 1, wherein
a thrust bearing is further disposed between the first motor and the coupling, the rotating shaft of the first motor passes through the thrust bearing, and the thrust bearing is configured to prevent the first motor from being damaged due to impact on the first motor during motion of the mounting bracket.

6. The multi-purpose screw telescopic transmission mechanism with a motor and a magnetic encoder, and the bracket thereof according to claim 4, wherein
the main machine further comprises a housing; and
a first mounting hole and a second mounting hole are further formed in a bottom of the housing to mount the main machine on the rotating bracket.

7. The multi-purpose screw telescopic transmission mechanism with a motor and a magnetic encoder, and the bracket thereof according to claim 6, wherein
the housing is provided with an ON/OFF button on one side and a mode button on the other side; and
the ON/OFF button and the mode button are electrically connected to the main control PCB.

8. The multi-purpose screw telescopic transmission mechanism with a motor and a magnetic encoder, and the bracket thereof according to claim 6, wherein
the bracket comprises a base, a U-shaped bracket, and a supporting crossbar; and
a lower end of the U-shaped bracket is mounted on the base, two ends of the supporting crossbar are mounted at an upper end of the U-shaped bracket, and the main machine is mounted on the supporting crossbar.

9. The multi-purpose screw telescopic transmission mechanism with a motor and a magnetic encoder, and the bracket thereof according to claim 8, wherein
a first bolt is disposed on the supporting crossbar, and the first bolt penetrates through the supporting crossbar and is connected to the bottom of the housing of the main machine;
a second bolt is further disposed on each of two sides of the supporting crossbar, a vertical adjustment groove is formed in each of two sides of the U-shaped bracket, the second bolts pass through the vertical adjustment grooves to fix the supporting crossbar on the U-shaped bracket, the height of the main machine is adjusted by adjusting a position thereof in the vertical adjustment grooves, and an inclination angle of the main machine is adjusted by rotating the supporting crossbar; and
the lower end of the U-shaped bracket is mounted on the base through a third bolt.

10. The multi-purpose screw telescopic transmission mechanism with a motor and a magnetic encoder, and the bracket thereof according to claim 9, wherein
a limiting post is further disposed on an upper side of the supporting crossbar;
the first bolt is mounted in the first mounting hole, and the limiting post is mounted in the second mounting hole; and
a suction cup is further disposed on the base to adsorb and fix the rotating bracket.
